# EUROPEAN PATENT APPLICATION

(11) **EP 2 860 083 A1**
(43) Date of publication of application: **15.04.2015**
(21) Application number: 14182873.1
(22) Date of filing: 29.08.2014
(51) Int. Cl.: B62B 5/00, A61H 3/04

(54) **Manually propelled vehicle**

(30) Priority: 30.08.2013 JP 2013180192
(71) Applicant: Funai Electric Co., Ltd., Daito city Osaka 574-0013 (JP)
(72) Inventor: Hijikata, Tsuguo, Osaka, Osaka 574-0013 (JP)
(74) Representative: Osha Liang SARL

(57) **Abstract**

A manually propelled vehicle includes a vehicle body (10), a wheel system (30) for moving the vehicle body, a grip (20) attached to the vehicle body, a grip sensor that detects a pressure applied to the grip (20), a grip state detector that detects a grip state of the grip (20) based on information acquired from the grip sensor, and a wheel driver that drives the wheel system (30) when the grip state detector detects a predetermined grip state.

## Description

### [Field of Invention]

The present invention generally relates to a manually propelled vehicle such as ambulatory assist vehicles, baby carriages, dollies, wheelchairs, and the like.

### [Background Art]

In recent years, the development of manually propelled vehicles as, for example, ambulatory assist vehicles in order to support elderly people with a weak physique or people with trouble walking, has progressed. Further, the installing of a manual assistive function, a so-called electromotor assist function, has been studied.

Patent Literature 1 discloses a technology according to an ambulatory assist vehicle as a conventional art that relates to an ambulatory assist vehicle. This ambulatory assist vehicle is capable of setting movement resistance freely when moving rearward or turning and is capable of automatically switching the movement characteristics of the ambulatory assist vehicle in accordance with a moving state by a user.

### [Patent Literature]

[Patent Literature 1] Japanese Patent Publication No. 2898969

In practice, a manually propelled vehicle comprising manual assistive functions, a sensing method to detect an operation intent of a user and an electromotor assisting method to reflect such detected result in the manual assisting function have not been established. There is room for improving the operability of manual propelled vehicles.

For example, an acting force applied in a vertical direction of a manually propelled vehicle is not taken into account in the conventional technology described in Patent Literature 1. Accordingly, it is possible that the electromotor assist function of the manually propelled vehicle may malfunction when, for example, a user hooks a bag or the like on the grip where the user holds or the user lifts up the grip. The conventional technology described above gives no consideration to such safety problems.

### [Summary of the Invention]

One or more embodiments of the present invention provide a manual propelled vehicle that can improve safety by preventing an assist operation unintended by a user and can perform appropriate human power assistance.

According to one or more embodiments, a manually propelled vehicle may comprise a vehicle body, a wheel system for moving the vehicle body, a grip attached to the vehicle body, a grip sensor that detects a pressure applied to the grip, a grip state detector that detects a grip state of the grip based on information acquired from the grip sensor, and a wheel driver that drives the wheel system when the grip state detector detects a predetermined grip state.

For example, according to one or more embodiments, the manually propelled vehicle may detect the grip state of the grip based on a pressure applied to the grip. At that time, the grip state detector may detect a predetermined grip state, which is the grip state when the user grips the grip. When the user grips the grip, the wheel system may be driven and unintended assist operation by a user may be prevented. Therefore, safety can be improved.

Further, according to one or more embodiments, the grip state detector may detect a distribution and an area of an applied pressure region detected by the grip sensor, determine whether the distribution and the area of the applied pressure region correspond to a predetermined condition, and detect the predetermined grip state when the grip state detector determines that the distribution and the area of the applied pressure region correspond to the predetermined condition.

For example, according to one or more embodiments, the manually propelled vehicle may determine the grip state of the user on the grip based on a distribution and an area of an applied pressure region of the grip. Accordingly, the manually propelled vehicle can distinguish whether the user gripped the grip to use the manually propelled vehicle as human power assistance or, for example, whether the user hooked a bag on the grip. According to one or more embodiments, when the bag is hooked on the grip, the wheel system is not driven and unintended assist operation by the user can be prevented. Therefore, safety can be improved.

Further, according to one or more embodiments, the grip may have a bar shape that extends in a left and right direction and that intersects an advancing direction of the manually propelled vehicle, and the grip sensor may be a plurality of grip sensors circumferentially disposed on the grip. Each of the plurality of grip sensors may have a band shape that extends in the left and right direction, and when the distribution of the applied pressure region is concentrated in an upper local part of the grip and the area of the applied pressure region does not exceed a predetermined value, the grip state detector may determine that the distribution and the area of the applied pressure region do not correspond to the predetermined condition.

For example, according to one or more embodiments, the manually propelled vehicle may distinguish the applied pressure state that concentrates at the top local part in the width direction of the grip; in other words and for example, it may distinguish the handle portion of a bag hooked on the grip. Accordingly, the manually propelled vehicle may determine that the user is not gripping the grip and unintended assist operation unintended by the user can be prevented.

Furthermore, according to one or more embodiments, the grip may have a bar shape that extends in a left and right direction and that intersects an advancing direction of the manually propelled vehicle, and the grip sensor may be a plurality of grip sensors circumferentially disposed on the grip. When the distribution of the applied pressure region is concentrated in a lower local part of the grip, the grip state detector may determine that the distribution and the area of the applied pressure region do not correspond to the predetermined condition.

For example, according to one or more embodiments, the manually propelled vehicle may distinguish the applied pressure state that concentrates at the lower part of the grip. That is, the user, for example, is attempting to lift up the grip. Accordingly, the manually propelled vehicle may determine that the user is not gripping the grip to use the manually propelled vehicle as the normal human-power assistance, and the assist operation unintended by the user can be prevented.

Moreover, according to one or more embodiments, the manually propelled vehicle may further comprise a user location sensor that detects a location of the user, wherein, the wheel driver does not drive the wheel system when the user location sensor does not detect the location of the user.

For example, according to one or more embodiments, the manually propelled vehicle may detect the location of the user in addition to detecting the grip state to the grip. As a result, the manually propelled vehicle can distinguish, for example, whether or not only bag or the like is existed by being hooked on the grip, or whether the user also exists near the grip. Further, there is a possibility that the predetermined grip state, which may be set in advance by the user, may be detected depending on how the bag or the like is hooked on the grip even though the user is not gripping the grip. However, according to one or more embodiments, because the wheel system is not driven when the location of the user cannot be detected, the assist operation unintended by the user can be more accurately prevented.

With a manually propelled vehicle according to one or more embodiments of the present invention, safety can be improved by preventing an assist operation unintended by a user and can perform appropriate human power assistance.

### [Brief Description of the Drawings]

FIG. 1 is a front view of a manually propelled vehicle according to one or more embodiments of a first example of the present invention.
FIG. 2 is a side view illustrating the manually propelled vehicle according to one or more embodiments of the first example of the present invention.
FIG. 3 is a plan view illustrating the manually propelled vehicle according to one or more embodiments of the first example of the present invention.
FIG. 4 is a plan view illustrating a grip of the manually propelled vehicle according to one or more embodiments of the first example of the present invention.
FIG. 5 is a block diagram of the manually propelled vehicle according to one or more embodiments of the first example of the present invention.
FIG. 6 is a schematic diagram illustrating a configuration of a wheel driver and a wheel system of the manually propelled vehicle according to one or more embodiments of the first example of the present invention.
FIG. 7 is a block diagram illustrating the configuration of the wheel driver of the manually propelled vehicle according to one or more embodiments of the first example of the present invention.
FIG. 8 is a perspective view illustrating a configuration of a grip sensor of the manually propelled vehicle according to one or more embodiments of the first example of the present invention.
FIG. 9 is a vertical cross-sectional view illustrating a section of the grip sensor of the grip of the manually propelled vehicle according to one or more embodiments of the first example of the present invention.
FIG. 10 is a perspective view illustrating a state when a user holds the grip of the manually propelled vehicle according to one or more embodiments of the first example of the present invention.
FIG. 11 is an exploded view schematically illustrating a pressure distribution of the grip sensor when the user holds the grip of the manually propelled vehicle according to one or more embodiments of the first example of the present invention.
FIG. 12 is a perspective view illustrating a state when a bag is hooked on the grip of the manually propelled vehicle according to one or more embodiments of the first example of the present invention.
FIG. 13 is an exploded view schematically illustrating a pressure distribution of the grip sensor when a bag is hooked on the grip of the manually propelled vehicle according to one or more embodiments of the first example of the present invention.
FIG. 14 is a perspective view illustrating a state when a user is trying to lift up the grip of the manually propelled vehicle according to one or more embodiments of a second example of the present invention.
FIG. 15 is an exploded view schematically illustrating a pressure distribution of the grip sensor when the user is trying to lift up the grip of the manually propelled vehicle according to one or more embodiments of the second example of the present invention.
FIG. 16 is a side view of a manually propelled vehicle according to one or more embodiments of a third example of the present invention.
FIG. 17 is a block diagram of the manually propelled vehicle according to one or more embodiments of the third example of the present invention.

### [Detailed Description of Embodiments]

One or more embodiments of the present invention are described in detail below, with reference to the drawings. All numbers, shapes, materials, configuring elements, locations of configuring elements, modes of connection, steps, orders of steps, and so on are no more than examples and do not, in anyway, limit the scope of the claims that specify the present invention. Hence, the specific configurations described are not necessarily required, and are merely presented as examples and illustrations.

### < First Example >

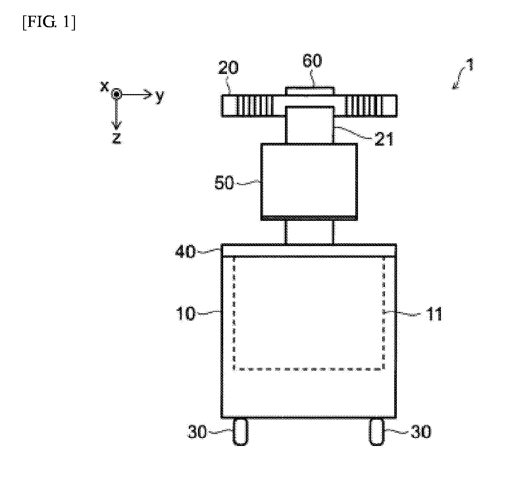

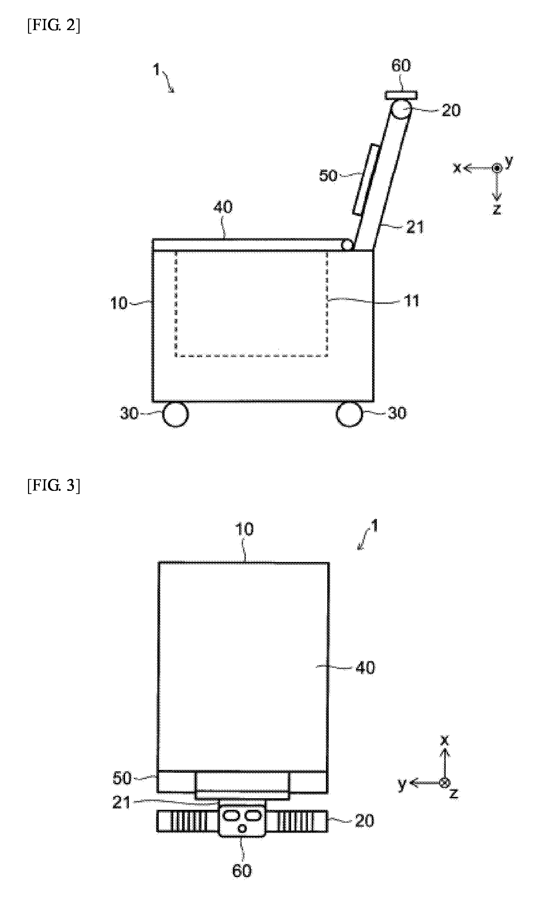

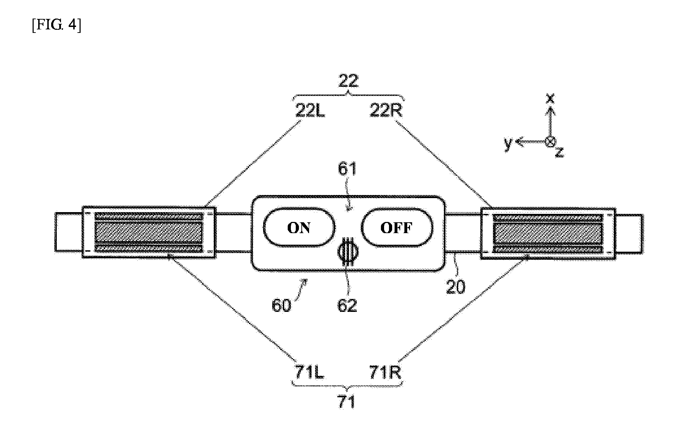

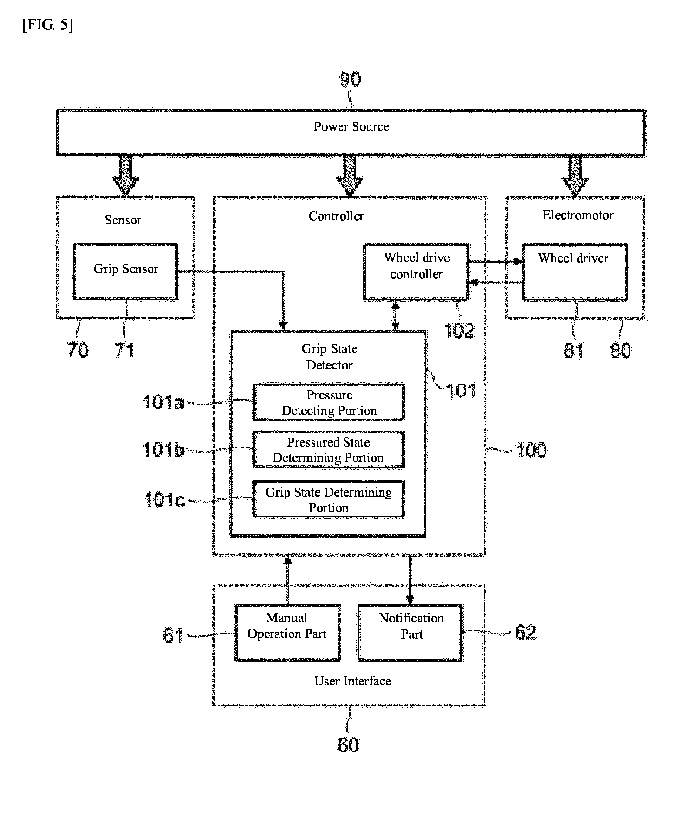

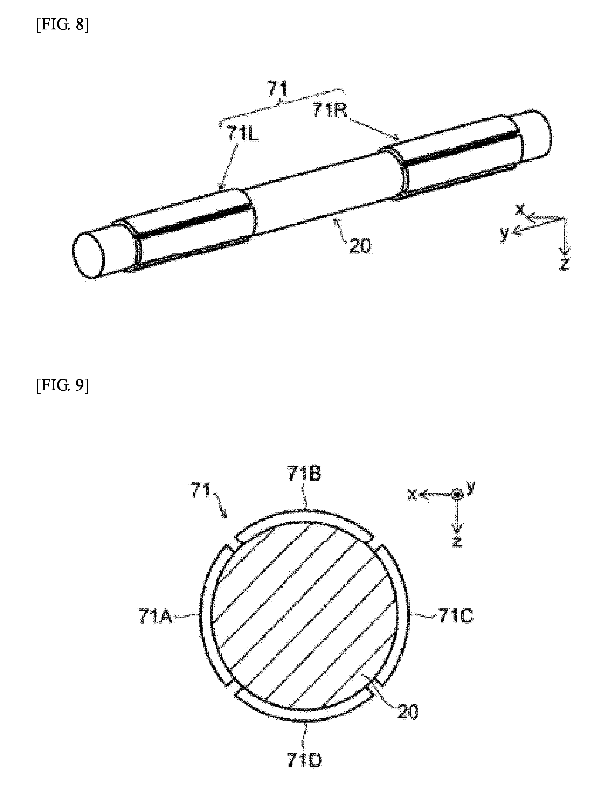

First, an outline of the configuration of a manually propelled vehicle according to one or more embodiments of the present invention will be described with reference to FIG. 1 to FIG. 5. FIG. 1, FIG. 2, and FIG. 3 are respectively a front view, a side view, and a plan view of the manually propelled vehicle. FIG. 4 is a plan view of a grip of the manually propelled vehicle, and FIG. 5 is a block diagram of the manually propelled vehicle. In the following descriptions, as illustrated in FIGS. 1 to 4, descriptions are given where the advancing direction of the manually propelled vehicle is the x direction, a direction where the grip of the manually propelled vehicle extends is the y direction, and the vertical direction of the manually propelled vehicle is the z direction. The x direction, y direction, and z direction illustrated in FIG. 8 also indicate the same directions.

According to one or more embodiments, the manually propelled vehicle 1 illustrated in FIG. 1 to FIG. 3 may be an ambulatory assist vehicle, a so-called walker that assists walking of a user, mainly elderly with a weak lower body and is also used as a basket for carrying baggage and a seat for resting. The manually propelled vehicle 1 may comprise a vehicle body 10, a grip 20, a wheel system 30, a seat 40, a backrest 50, a user interface 60, a sensor 70, an electromotor 80, a power supply 90, and a controller 100.

The vehicle body 10 may be a chassis of the manually propelled vehicle 1 on which the components 20 to 100 listed above may be provided. A space as a baggage compartment 11 may be provided inside and the lower part of the seat 40 of the vehicle body 10. For the frame material forming the vehicle body 10, for example, stainless steel, aluminum alloy, or the like may be used.

The grip 20 may be where a user grips at the time of walking and is attached to the vehicle body 10 via a support part 21. The grip 20 may be formed like a bar shape extending in the left and right width direction (y direction) intersecting in the advancing direction (x direction) of the manually propelled vehicle 1. The user can move the manually propelled vehicle 1 forward, backward, braking, and turning by applying human power through gripping the grip 20 with both hands or with one hand. A slip resistant grip 22 may be provided on the grip 20 (left hand grip 22L and right hand grip 22R) as illustrated in FIG. 4. A height adjustment mechanism may be provided to the grip 20 or the support part 21.

The wheel system 30 may comprise one or more annular wheels in order to move the vehicle body part 10 along the ground by rotating in harmony with the walking of the user. At least one wheel of the wheel system 30 may be rotated by being driven and controlled by the electromotor 80 that receives control commands from the controller 100. The wheel system 30 may comprise drive wheel(s) and idler wheel(s). A configuration and drive control of the wheel system 30 will be described in detail below.

The seat 40 may be a plate-like member for the user to sit down on when seated. The seat 40 may also function as an upper lid of the baggage compartment 11 and is attached so as to enable the upper opening part of the baggage compartment 11 to open and close.

The backrest 50 may be a plate-like member for the user to lean back against when seated on the seat 40. The backrest 50 may be attached to the support part 21 or integrally provided with the vehicle body 10.

The user interface 60 may be a device for exchanging information between the user and the controller 100. The user interface 60 may be provided at a position where the user can easily operate, for example, on the grip 20 that is near the height of the eyes of the user.

The user interface 60 may comprise a manual operation part 61 and a notification part 62. The manual operation part 61 may receive the manual operation by the user including, for example, an ON/OFF switch button on the electromotor assist function. The notification part 62 informs a variety of information to the user. As the notification part 62, a light emitting diode, a liquid crystal display panel, or the like may be used other than a speaker as illustrated in FIG. 4.

The sensor 70 may monitor surrounding conditions, usage condition of the manually propelled vehicle 1 or a walking posture of the user, and a grip sensor 71 may be included in one or more embodiments of the first example. The grip sensor 71 may detect pressure applied on the grip 20. The grip sensor 71 may include a left hand grip sensor 71L provided at the left grip 22L and a right hand grip sensor 71R provided at the right hand grip 22R. A detailed description of the grip sensor 71 will be given below.

The electromotor 80 may drive each component of the manually propelled vehicle 1 by electric operation according to instructions from the controller 100. The wheel driver 81 may electromotively drive the wheel system 30 according to instructions from the controller 100.

The power supply 90 may supply power to the user interface 60, sensor 70, electromotor 80, and controller 100. A secondary battery (such as a nickel-hydrogen battery or lithium-ion battery) attaching to the vehicle body 10 in a removable manner may be used for the power supply 90.

The controller 100 may be a logic circuit (such as a microcomputer) that comprehensively controls the user interface 60, sensor 70, and electromotor 80. The controller 100 may set a variety of parameters (rotation direction of the motor, each target value of the rotation speed, the rotation torque or the like) of the wheel driver 81 according to the output of the grip sensor 71 to realize assisting human power according to a walking posture and intent of the user.

The controller 100 may include a grip state detector 101 and a wheel drive controller 102. The grip state detector 101 may detect a grip state on the grip 20 based on information acquired from the grip sensor 71 and determine a target value of the electromotor assist operation. The wheel drive controller 102 may control the rotation speed and rotation direction of the wheel system 30 according to the target value of the electromotor assist operation.

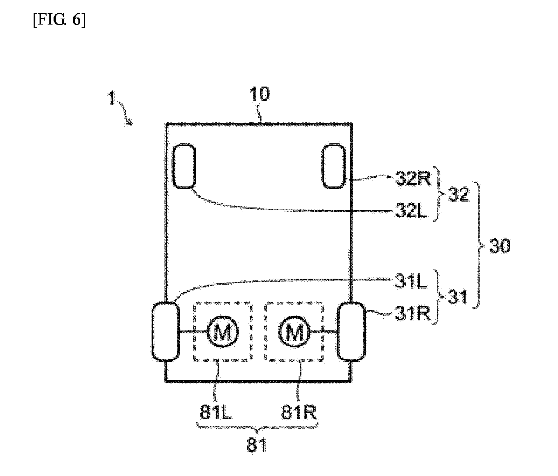

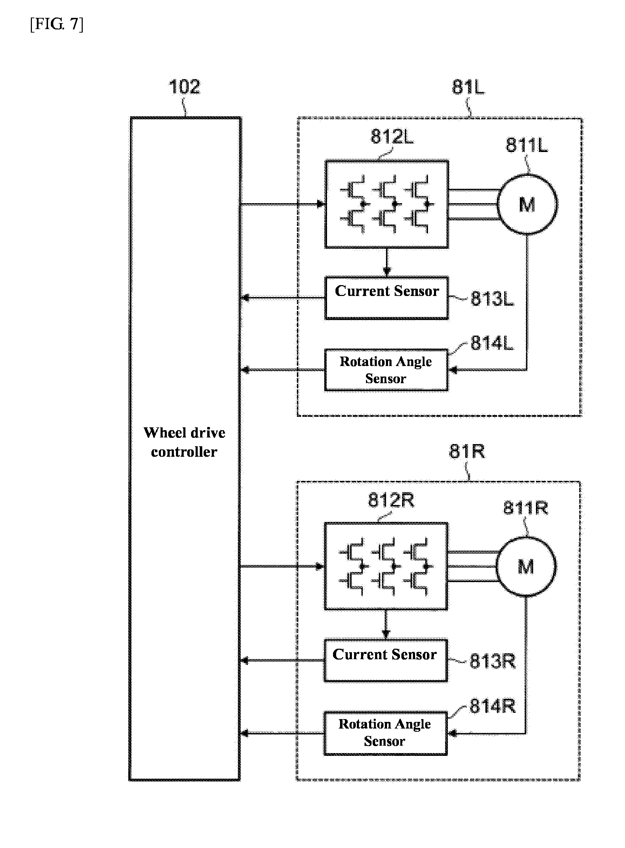

Next, one or more embodiments of the wheel system 30 and the wheel driver 81 will be described with reference to FIG. 6 and FIG. 7 in addition to FIG. 5. FIG. 6 is a schematic diagram illustrating the configuration of the wheel system 30 and the wheel driver 81, and FIG. 7 is a block diagram illustrating the configuration of the wheel driver 81.

The wheel system 30 may be a four-wheel structure comprising drive wheels 31 and idler wheels 32 as illustrated in FIG. 6. The drive wheels 31 may be composed of a left drive wheel 31L and a right drive wheel 31R that rotate around an axle by an assisting power or by human power. The idler wheels 32 may be composed of a left idler wheel 32L and a right idler wheel 32R used for turning.

The wheel driver 81 may comprise a left wheel driver 81L and a right wheel driver 81R respectively corresponding to the left drive wheel 31L and the right drive wheel 31R. The left wheel driver 81L and the right wheel driver 81R may respectively drive and control the rotation speed and the rotation direction of the left drive wheel 31L and the right drive wheel 31R independently.

The left wheel driver 81L and the right wheel driver 81R may respectively include the same configuration elements as illustrated in FIG. 7. The left wheel driver 81L may include a motor 811L, a motor driver 812L, a current sensor 813L, and a rotation angle sensor 814L. The right wheel driver 81R may include a motor 811R, a motor driver 812R, a current sensor 813R, and a rotation angle sensor 814R. The description of the identification codes "L" and "R" indicating the left and right will be omitted unless helpful for illustration purposes.

Each of the motors 811L and 811R may rotate and drive the left drive wheel 31L and the right drive wheel 31R independently. The motor drive 812 may be an inverter circuit for generating a drive current for the motor 811 according to the control signal from the controller 100. The current sensor 813 may detect the drive current supplied to the motor 811. The rotation angle sensor 814 may detect the rotation angle of the motor 811. The wheel drive controller 102 may carry out feedback control of the motor driver 812 so as to match the rotation direction and rotation speed of the motor 811 with the target value according to each output of the current sensor 813 and the rotation angle sensor 814.

Next, one or more embodiments of the grip sensor 71 will be described with reference to FIG. 8 and FIG. 9 in addition to FIG. 4 and FIG. 5. FIG. 8 is a perspective view illustrating a configuration of the grip sensor 71, and FIG. 9 is a vertical cross-sectional view illustrating a section of the grip sensor 71 of the grip 20. Note, FIG. 8 and FIG. 9 omit illustrations of the support part 21 and the user interface 60. Further, in the same manner as described above, the descriptions of the identification codes "L" and "R" indicating the left and right may be omitted unless helpful for illustration purposes.

The grip sensor 71 may be a band shape in the direction where the grip 20 extends as illustrated in FIG. 8 and FIG. 9, that is, extending along the left and right width direction (y direction) of the manually propelled vehicle 1. The grip sensor 71 may be disposed by arranging 4 sheets (71A, 71B, 71C, and 71D) of the same shape and the same size at equal intervals along the circumferential direction on the surface of the grip 20. The grip sensor 71A may be attached to the front side of the grip 20, the grip sensor 71B may be attached to the top side, the grip sensor 71C may be attached to the rear side (user side), and the grip sensor 71D may be attached to the bottom side.

The grip sensor 71 may be a sheet-like member, for example, where a plurality of pressure sensors is arranged in a matrix. The plurality of pressure sensors may output electric signals in which the signal level (for example, a voltage value) fluctuates according to the amount of pressure applied to each. For example, when the user is holding the grip 20, distribution of pressure according to the gripping conditions may be detected by the grip sensor 71. The pressure distribution may be detected by both the left hand grip sensor 71L and the right hand grip sensor 71R when operating with both hands. The pressure distribution may be detected by either one of the left hand grip sensor 71L or the right hand grip sensor 71R when operating with one hand.

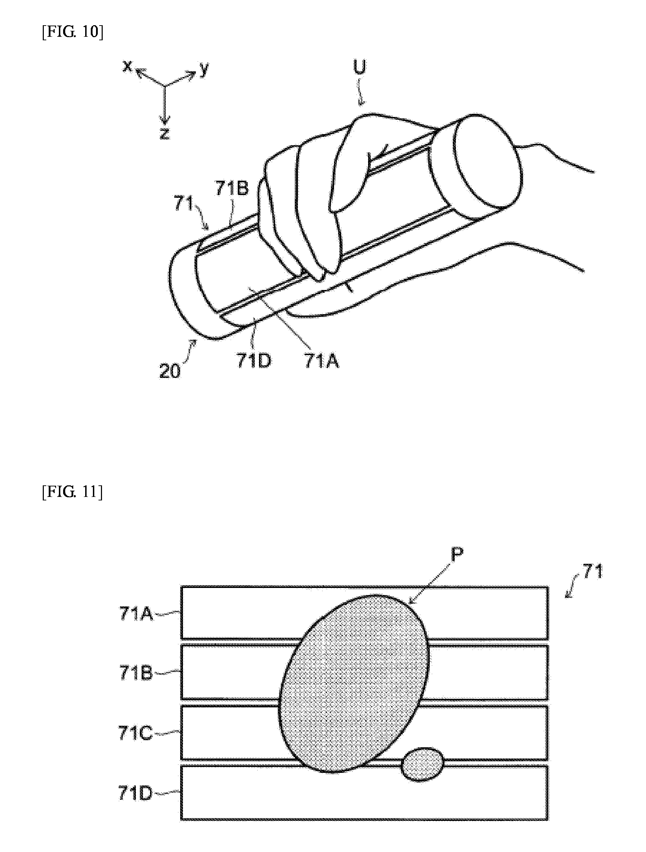

FIG. 10 is a perspective view illustrating a state when a user U holds the grip 20, and FIG. 11 is an exploded view schematically illustrating the pressure distribution of the grip sensor 71 at that time. FIG. 10 illustrates only one portion of the grip 20.

For example, when the user U pushes on the grip 20 to move the manually propelled vehicle 1 forward, a thenar and a hypothenar (a thick portion near the wrist) of the palm that may grip the grip 20 may contact the grip sensor 71 strongly as illustrated in FIG. 10. Accordingly, the pressure distribution P applied on the near side to the user of the grip sensor 71 illustrated in FIG. 11, that is, where a relatively large force is applied focusing around the section of the grip sensor 71C, may be detected.

Furthermore, for example, when the user pulls on the grip 20 to move the manually propelled vehicle 1 backward, the balls of four fingers (forefinger, middle finger, ring finger, and little finger) that grip the grip 20 may contact the grip sensor 71 strongly as illustrated in FIG. 10. Accordingly, the pressure distribution P applied on the far side to the user of the grip sensor 71 illustrated in FIG. 11, that is, where a relatively large force is applied focusing around the section of the grip sensor 71A may be detected.

With such grip sensor 71, the controller 100 of the manually propelled vehicle 1 may comprise a grip state detector 101 illustrated in FIG. 5. The grip state detector 101 may detect a grip state on the grip 20 based on information acquired from the grip sensor 71, and may comprise a pressure detecting portion 101a, an applied pressure determining portion 101b, and a grip state determining portion 101c. In one or more embodiments of this example, the grip state detector 101 may be provided in the controller 100; however, the grip state detector 101 may also be provided separately from the controller 100.

The pressure detecting portion 101a may derive a distribution and an area of an applied pressure region detected by the grip sensor 71. The pressure detecting portion 101a may derive the distribution and the area of the applied pressure region straddling to the 4 grip sensors 71A, 71B, 71C, and 71D.

The applied pressure determining portion 101b may determine whether or not the distribution and the area of the applied pressure region detected by the pressure detecting portion 101 a correspond to a predetermined condition set in advance. The predetermined condition of the distribution and the area of the applied pressure region may be a condition that has been set in advance to correspond to the distribution and the area of the applied pressure region detected by the grip sensor 71 when the user performs normal operation on the manually propelled vehicle 1, and that is stored in a storage unit or the like (not illustrated).

If the distribution and the area of the applied pressure region detected by the grip sensor 71 correspond to the predetermined condition, the user may be gripping the grip 20 firmly in order to perform normal operation on the manually propelled vehicle 1. Accordingly, the grip state determining portion 101c may determine that the predetermined grip state set in advance by, for example, the user is detected when the applied pressure determining portion 101b determines that the distribution and the area of the applied pressure region correspond to the predetermined condition set in advance.

The grip state detector 101 may use the pressure detecting portion 101a, the applied pressure determining portion 101b and the grip state determining portion 101c to detect the grip state on the grip 20. Then, when the predetermined grip state, which may be set in advance by the user, is detected by the grip state detector 101, the manually propelled vehicle 1 may drive the wheel system 30 (e.g. it may drive at least one wheel of the wheel system) via the wheel driver 81.

On the other hand, when the predetermined grip state is not detected by the grip state detector 101, the manually propelled vehicle 1 may stop the assist operation.

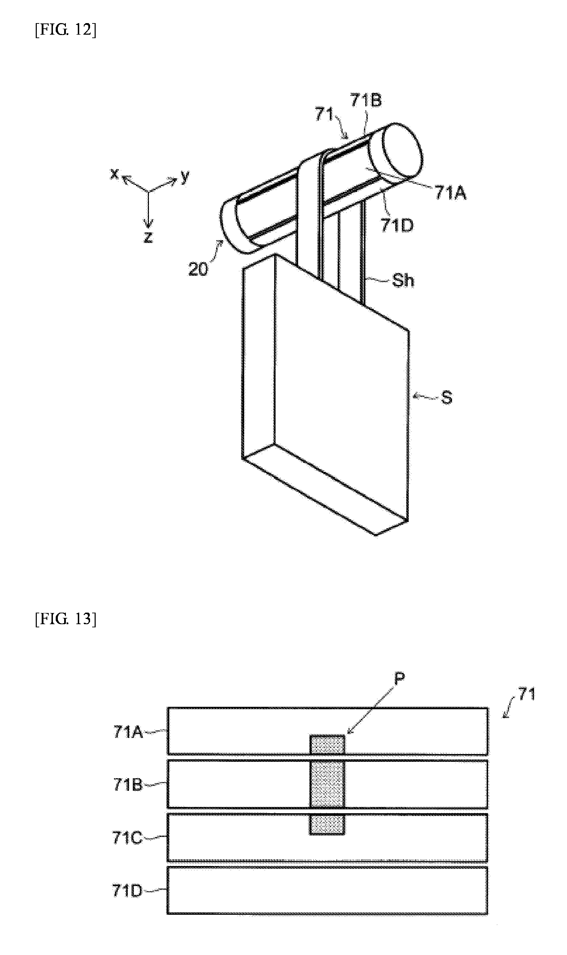

FIG. 12 is a perspective view illustrating a state when a bag is hooked on the grip 20, and FIG. 13 is an exploded view schematically illustrating the pressure distribution of the grip sensor 71 at that time. FIG. 12 illustrates only one portion of the grip 20.

For example, when the user hooks a handle part Sh of a bag S on the grip 20, the handle part Sh of the bag S illustrated in FIG. 12 may be in contact with the grip sensor 71 strongly so that the distribution of the applied pressure region is concentrated at the top local part in the width direction (y direction) of the grip 20. Accordingly, the pressure distribution P may be detected where a relatively large force is applied downward (z direction) to the upper side of the grip sensor 71 illustrated in FIG. 13, that is, focusing around the local part in the width direction (y direction) of the grip sensor 71B.

When the distribution of the applied pressure region is concentrated at the top local part in the width direction of the grip 20 and the area of the applied pressure region does not exceed the predetermined value, which may be set in advance, the applied pressure determining portion 101b may determine that the distribution and the area of the applied pressure region do not correspond to the predetermined condition. If the distribution and the area of the applied pressure region detected by the grip sensor 71 do not correspond to the predetermined condition, the user may not be gripping the grip 20 firmly; in other words, the handle part Sh of the bag S may be hooked on the grip 20. Accordingly, because the predetermined grip state was not detected by the grip state detector 101, the manually propelled vehicle 1 may stop the assist operation.

According to one or more embodiments, the grip state detector 101 may simultaneously detect that the user is gripping the grip 20 and that an object such as the bag S is hooked on the grip 20. In that case, the manually propelled vehicle 1 may activate the assist operation because the user is gripping the grip 20.

A manually propelled vehicle according to one or more embodiments of the present invention may comprise a vehicle body, a wheel system for moving the vehicle body, a grip attached to the vehicle body, a grip sensor that detects a pressure applied to the grip, a grip state detector that detects a grip state of the grip based on information acquired from the grip sensor, and a wheel driver that drives the wheel system when the grip state detector detects a predetermined grip state.

In one or more embodiments of this example, the manually propelled vehicle 1 can detect the grip state for the grip 20 based on the pressure applied to the grip 20. At that time, the grip state detector 101 can detect the predetermined grip state, i.e., the grip state by the user for the grip 20. Accordingly, the manually propelled vehicle 1 can distinguish that the grip 20 is gripped intentionally by the user for using the manually propelled vehicle 1 as human power assistance. When the user grips the grip 20, the wheel system 30 is driven, the assist operation unintended by the user can be prevented, and therefore, it can improve safety.

Further, the manually propelled vehicle 1 may comprise a pressure detecting portion that detects a distribution and an area of an applied pressure region detected by the grip sensor, an applied pressure determining portion that determines whether the distribution and the area of the applied pressure region correspond to a predetermined condition, and a grip state determining portion that detects the predetermined grip state when the applied pressure determining portion determines that the distribution and the area of the applied pressure region correspond to the predetermined condition.

In one or more embodiments of this example, the manually propelled vehicle 1 can determine the grip state by the user for the grip 20 based on the distribution and the area of the applied pressure region of the grip 20. Accordingly, the manually propelled vehicle 1 can distinguish whether the user is gripping the grip 20 to use the manually propelled vehicle 1 as the human power assistance or, for example, whether the user has hooked a bag S on the grip 20. When the user has hooked the bag S on the grip 20, the wheel system 30 is not driven, the assist operation unintended by the user can be prevented. Therefore, safety can be improved.

Furthermore, the manually propelled vehicle 1 may comprise a grip that has a bar shape that extends in a left and right direction and that intersects an advancing direction of the manually propelled vehicle, the grip sensor is a plurality of grip sensors circumferentially disposed on the grip, each of the plurality of grip sensors has a band shape that extends in the left and right direction, and when the distribution of the applied pressure region is concentrated in an upper local part of the grip and the area of the applied pressure region does not exceed a predetermined value, the applied pressure determining portion determines that the distribution and the area of the applied pressure region do not correspond to the predetermined condition.

In one or more embodiments of this example, the manually propelled vehicle 1 can distinguish the applied pressure state that concentrates in the upper local part in the width direction of the grip 20; in other words, the handle portion Sh of the bag S, for example, is hooked on the grip 20. Accordingly, it can determine that the user is not gripping the grip 20 and the assist operation unintended by the user can be prevented.

### [Second Example]

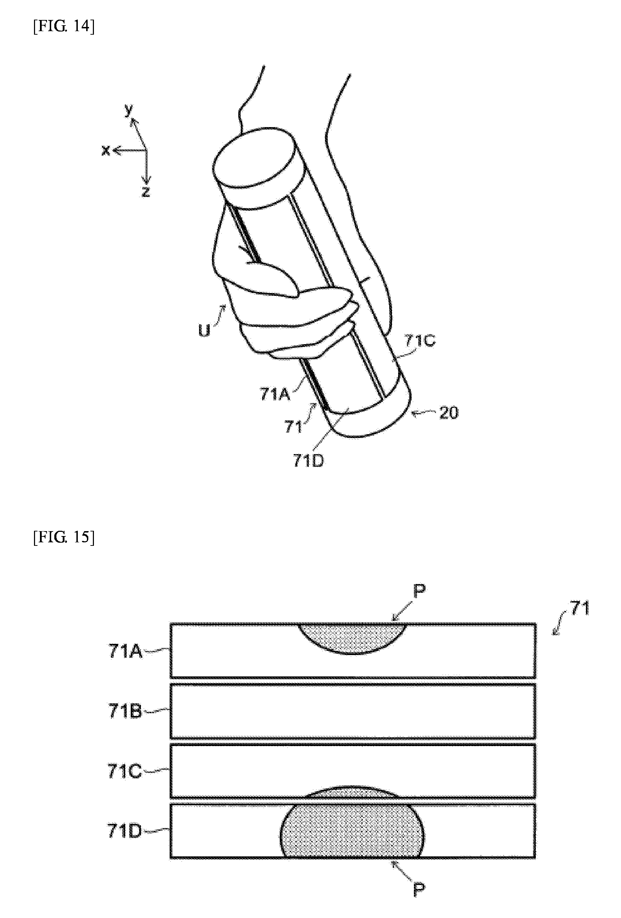

Next, a manually propelled vehicle according to one or more embodiments will be described in reference to FIG. 14 and FIG. 15. FIG. 14 is a perspective view illustrating a state where a user attempts to lift the grip of the manually propelled vehicle, and FIG. 15 is an exploded view schematically illustrating a pressure distribution of the grip sensor when the user attempts to lift the grip of the manually propelled vehicle. In FIG. 14, only one portion of the grip is drawn. Further, the fundamental configuration of the second example may be substantially the same as the first example, which is described above. Accordingly, the same reference numerals are used for like elements, and illustration of the drawings and the descriptions thereof are omitted.

The manually propelled vehicle 1 according to one or more embodiments of the second example detects a gripped state on the grip 20 where a grip state detector 101 differs from that of the first example.

For example, when a user attempts to lift the grip 20, the balls of four fingers (forefinger, middle finger, ring finger, and little finger) that grip the grip 20 illustrated in FIG. 14 may contact the grip sensor 71 strongly so that the distribution of the pressure region is concentrated at a lower part of the grip 20. Accordingly, the pressure distribution P may be detected at the bottom side of the grip sensor 71 as illustrated in FIG. 15, that is, where a relatively large force is applied upward (z direction) focusing around the grip sensor 71D.

When the distribution of the applied pressure region is concentrated at a lower part of the grip 20, the applied pressure determining portion 101b may determine that the distribution and the area of the applied pressure region do not correspond to the predetermined condition. If the distribution and the area of the applied pressure region detected by the grip sensor 71 do not correspond to the predetermined condition, the user may not be gripping the grip 20 firmly; in other words, the user is attempting to lift the grip 20 here. Then, because the predetermined grip state, which may be set in advance by the user, was not detected by the grip state detector 101, the manually propelled vehicle 1 may stop the assist operation.

In this manner, the manually propelled vehicle 1 can distinguish the applied pressure concentrated at the lower part of the grip 20, i.e., the user is attempting to lift up the grip 20. Accordingly, it can determine that the user is not gripping the grip 20 to use the manually propelled vehicle 1 under normal manual assistance, and an assist operation unintended by the user can be prevented.

### [Third Example]

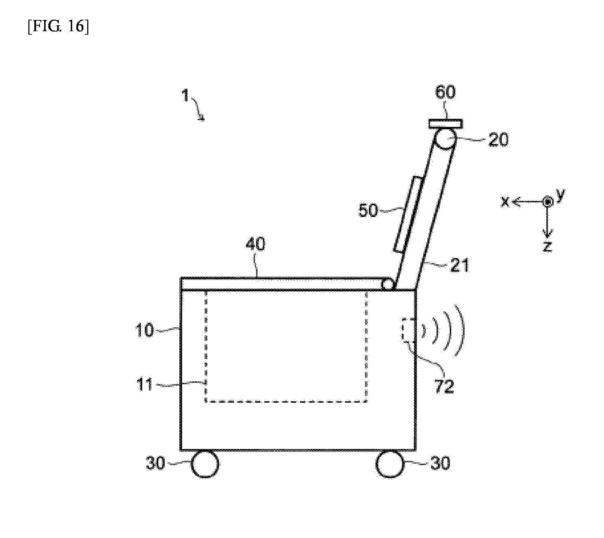

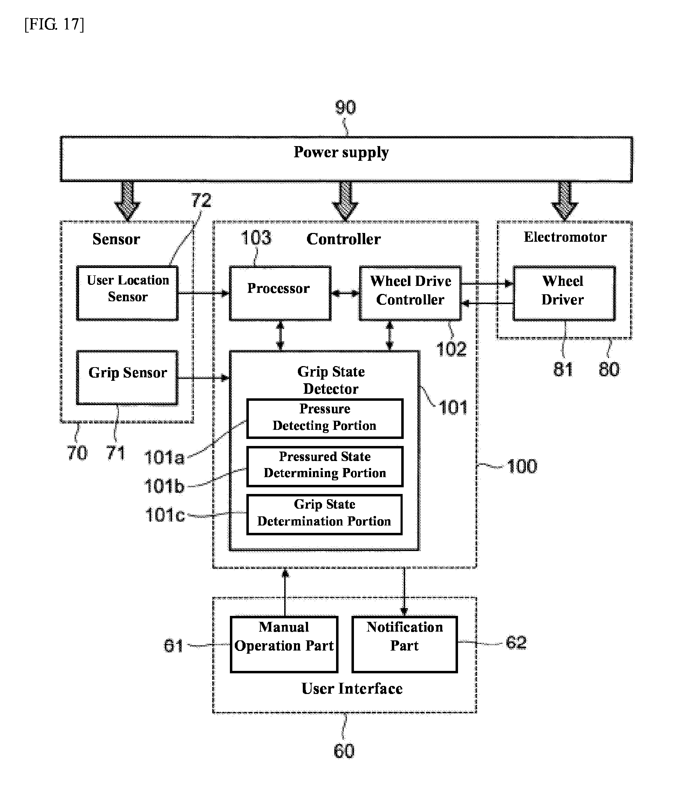

Next, a manually propelled vehicle according to one or more embodiments of a third example of the present invention will be described with reference to FIG. 16 and FIG. 17. FIG. 16 is a side view of the manually propelled vehicle, and FIG. 17 is a block diagram of the manually propelled vehicle. The fundamental configuration of the present example may be substantially the same as the first example described above. Therefore, like reference numerals are used for configuration elements common, and the illustration of the drawings and the descriptions thereof are omitted.

The manually propelled vehicle 1 according to one or more embodiments of the third example may comprise a user location sensor 72 as illustrated in FIG. 16 and FIG. 17. The user location sensor 72 may be provided, for example, on the back surface of the vehicle body 10 and may detect a user location. The user location sensor 72 detects the user location further rearward to the back surface of the vehicle body 10 as a detecting region. As the user location sensor 72, for example, a thermal detecting sensor or an obstacle sensor of a distance measurement type using a laser, infrared rays, ultrasonic or the like may be used.

A controller 100 may include a processor 103. The processor 103 may processes information acquired from the user location sensor 72. The manually propelled vehicle 1 may not drive the wheel system 30 even if the grip state detector 101 detected the predetermined grip when the location of the user cannot be detected by the user location sensor 72.

According to this configuration, the manually propelled vehicle 1 may detect the location of the user in addition to detecting the grip state to the grip 20. As a result, the manually propelled vehicle 1 can distinguish, for example, whether or not only a bag or the like exists hooked to the grip 20, or the user also exists near the grip 20. There is a possibility that the predetermined grip state may be detected despite the user does not grip the grip 20 depending on how the bag or the like is hooked to the grip 20. However, according to one or more embodiments of this example, because this does not drive the wheel system 30 when the location of the user cannot be detected by using the user location sensor 72, the operation unintended by the user can be prevented more accurately.

While the disclosure includes a limited number of embodiments, those skilled in the art, having benefit of this disclosure, will appreciate that other embodiments may be devised which do not depart from the scope of the present disclosure. Also, the features of these embodiments can be used in varying combinations with each other, and are not intended to be limited to the specific combinations disclosed herein. Furthermore, those of ordinary skill in the art would appreciate that certain "units," "parts," "elements," or "portions" of one or more embodiments of the present invention may be implemented by a circuit, processor, etc. using known methods. Accordingly, the scope should be limited only by the attached claims.

For example, the left hand grip sensor 71L and the right hand grip sensor 71R are physically separated according to one or more embodiments; however, the structure of the grip sensor 71 is not limited thereto. The left hand grip sensor 71L and the right hand grip sensor 71R may be formed integrally without separating each other, or the left hand grip sensor 71L and the right hand grip sensor 71R may be further separated from each other.

One or more embodiments of the present invention can be used for safety improvement of a manually propelled vehicle.

### [Description of the Reference Numerals]

- 1: manually propelled vehicle (e.g., ambulatory assist vehicle)
- 10: vehicle body
- 20: grip
- 70: sensor
- 71: grip sensor
- 72: user location sensor
- 80: electromotor
- 81: wheel driver
- 100: controller
- 101: grip state detector
- 101a: pressure detecting portion
- 101b: app lied pressure determining portion
- 101c: grip state determining portion

## Claims

1. A manually propelled vehicle, comprising:
a vehicle body (10);
a wheel system (30) for moving the vehicle body;
a grip (20) attached to the vehicle body;
a grip sensor (71) that detects a pressure applied to the grip;
a grip state detector (101) that detects a grip state of the grip (20) based on information acquired from the grip sensor (71); and
a wheel driver (81) that drives the wheel system (30) when the grip state detector (101) detects a predetermined grip state.

2. The manually propelled vehicle according to claim 1, wherein the grip state detector (101):
detects a distribution and an area of an applied pressure region detected by the grip sensor (71);
determines whether the distribution and the area of the applied pressure region correspond to a predetermined condition; and
detects the predetermined grip state when the grip state detector (101) determines that the distribution and the area of the applied pressure region correspond to the predetermined condition.

3. The manually propelled vehicle according to claim 2, wherein
the grip (20) has a bar shape that extends in a left and right direction and that intersects an advancing direction of the manually propelled vehicle,
the grip sensor (71) is a plurality of grip sensors (71A-71D) circumferentially disposed on the grip (20),
each of the plurality of grip sensors (71A-71D) has a band shape that extends in the left and right direction, and
when the distribution of the applied pressure region is concentrated in an upper local part of the grip (20) and the area of the applied pressure region does not exceed a predetermined value, the grip state detector (101) determines that the distribution and the area of the applied pressure region do not correspond to the predetermined condition.

4. The manually propelled vehicle according to claim 2 or 3, wherein
the grip (20) has a bar shape that extends in a left and right direction and that intersects an advancing direction of the manually propelled vehicle
the grip sensor (71) is a plurality of grip sensors (71A-71D) circumferentially disposed on the grip (20), and
when the distribution of the applied pressure region is concentrated in a lower local part of the grip (20), the grip state detector (101) determines that the distribution and the area of the applied pressure region do not correspond to the predetermined condition.

5. The manually propelled vehicle according to any one of claims 1 to 4, further comprising a user location sensor (72) that detects a location of a user, wherein, the wheel driver does not drive the wheel system (30) when the user location sensor (72) does not detect the location of the user.

6. A method for controlling a manually propelled vehicle comprising a vehicle body, a wheel system (30) for moving the vehicle body (10), and a grip (20) attached to the vehicle body, the method comprising:
detecting a pressure applied to the grip (20);
detecting a grip state of the grip (20) based on the detected pressure; and
driving the wheel system (30) when the detected grip state corresponds to a predetermined grip state.

7. The method according to claim 6, wherein the detecting the grip state of the grip (20) further comprises:
detecting a distribution and an area of an applied pressure region;
determining whether the detected distribution and the detected area of the applied pressure region correspond to a predetermined condition; and
detecting the predetermined grip state when the detected distribution and the detected area of the applied pressure region correspond to the predetermined condition.

8. The method according to claim 7, wherein the determining whether the distribution and the area of the applied pressure region correspond to the predetermined condition further comprises:
determining that the detected distribution and the detected area of the applied pressure region do not correspond to the predetermined condition when the distribution of the applied pressure region is concentrated in an upper local part of the grip (20) and the detected area of the applied pressure region does not exceed a predetermined value.

9. The method according to claim 7 or 8, wherein the determining whether the distribution and the area of the applied pressure region correspond to the predetermined condition further comprises:
determining that the detected distribution and the detected area of the applied pressure region do not correspond to the predetermined condition when the distribution of the applied pressure region is concentrated in a lower local part of the grip (20).

10. The method according to any one of claims 6 to 9, wherein the driving stops when a location of a user is not detected.
